# EUROPEAN PATENT APPLICATION

(11) **EP 1 736 236 A1**
(43) Date of publication of application: **27.12.2006**
(21) Application number: 04770926.6
(22) Date of filing: 26.07.2004
(51) Int. Cl.: B01J 20/06, C02F 1/28

(54) **ANION ADSORBENT, PROCESS FOR PRODUCING THE SAME AND METHOD OF WATER TREATMENT**

(71) Applicant: Kurita Water Industries Ltd., Shinjuku-ku, Tokyo 160-8383 (JP)
(72) Inventor: NAKANO, Tadashi, c/o KURITA WATER INDUSTRIES LTD., Shinjuku-ku, Tokyo 160-8383 (JP); KAWAKATSU, Takahiro KURITA WATER INDUSTRIES LTD., Shinjuku-ku, Tokyo 160-8383 (JP); KUWANO, Hiroaki, c/o KURITA WATER INDUSTRIES LTD., Shinjuku-ku, Tokyo 160-8383 (JP)
(74) Representative: Albrecht, Thomas
(86) International application number: PCT/JP2004/010615
(87) International publication number: WO 2006/011191

(57) **Abstract**

An anion absorbent comprising sintered clay of porous structure and a rare earth compound supported on the sintered clay. The anion absorbent is produced by a production method of an anion absorbent comprising a mixing step of mixing clay with an additive for making the clay porous, a sintering step of sintering a mixture obtained in the mixing step, and a supporting step of supporting a rare earth compound on the clay before the mixing step and/or on a sintered matter after the sintering step. A water treatment method comprising a step of bringing the anion absorbent into contact with water to be treated at a predetermined pH so as to absorb and thus remove anions in the water to be treated, and a step of bringing the absorbent, which absorbed anions, into contact with solution having pH, which is different from the aforementioned predetermined pH, so as to desorb anions from the absorbent.

## Description

### TECHNICAL FIELD

The present invention relates to an anion absorbent for absorbing and thus removing anions such as fluoride ion, borate ion, phosphate ion, and arsenite ion, which are contained in, for example, open water such as river water, groundwater, seawater, and lake water, various kinds of waste water such as sewage water and industrial drainage, water in aquariums, pet shops, household fish tanks, and preserves, and also relates to a production method of the anion absorbent and a water treatment method using the anion absorbent.

### BACKGROUND ART

Recently, the effluent control of anions, particularly fluoride ion, borate ion, and phosphate ion, has become stringent on an international basis. Drainage of electronics industry, metal-processing industry, ceramic industry and the like contain much fluoride ion, borate ion. In Japan, according to the regulation of industrial drainage, fluoride ion must be controlled to be 8mg-F/L or less and borate ion must be controlled to be 10mg-B/L or less.

Conventionally, fluoride ion and borate ion in industrial drainage have been normally treated by using a means of coagulating sedimentation or the like. However, the requirement according to the regulation can not be satisfied only by a single treatment of the means and further advanced treatment will be required.

JP S61-187931A and JP 2002-1313A describe use of oxide or hydroxide of a rare earth metal as an absorbent.

As the size of absorbent is smaller, the absorbent has greater surface area per unit quantity and larger absorbing amount and, on the other hand, the absorbent has deteriorated sedimentation property, making the operation of recovery and recycle cumbersome. If the strength of absorbent is poor, in case of using the absorbent in the absorption tower, there is a problem of increasing flow resistance because the absorbent may deform or be fractured in a lower portion of an absorption tower.

JP 2000-24647A and JP 2002-153864A describe methods of increasing the apparent specific gravity of the absorbent by supporting a rare earth compound on a porous carrier. By supporting a rare earth compound on a porous inorganic carrier such as alumina or depositing absorptive material to surfaces of high-molecular substances, the surface area of the absorbent is increased and solid-liquid separation is facilitated, but the cost of the absorbent is increased because the carrier is expensive. In case of supporting an absorptive material on a high-molecular substance, the strength of the absorbent and the solid-liquid separation property are increased, but the absorptive efficiency and the desorption efficiency after adsorption are reduced.

### DISCLOSURE OF THE INVENTION

It is an object of the present invention to provide an anion absorbent for absorbing and thus removing anions such as fluoride ion, borate ion, phosphate ion, and arsenite ion, which are contained in, for example, open water such as river water, groundwater, seawater, and lake water, various kinds of waste water such as sewage water and industrial drainage, water in aquariums, pet shops, household fish tanks, and preserves, wherein the absorbent has large surface area per unit quantity, excellent absorptive capability, and high strength, can be easily separated, collected and recycled, and is still inexpensive, and also to provide a production method of this anion absorbent.

It is another object of the present invention to provide a water treatment method using such an anion absorbent for effectively and economically absorbing and removing anions from water to be treated.

An anion absorbent of the present invention comprises sintered clay of porous structure and a rare earth compound supported on the sintered clay.

The anion absorbent has a large specific surface area because the rare earth compound as an absorbing component is supported on the sintered clay having porous structure. Therefore, the anion absorbent has excellent absorptive capability. Since the anion absorbent has high strength, there is no problem on deformation nor destruction even when the absorbent is used in an absorption tower. Since the anion absorbent is also excellent in solid-liquid separation, the absorbent can be easily collected and recycled repeatedly.

The anion absorbent can be produced by a production method of an anion absorbent of the present invention comprising a mixing step wherein clay is mixed with an additive for making the clay porous, a sintering step wherein a mixture obtained in the mixing step is sintered, and a supporting step wherein a rare earth compound is supported on the clay before the mixing step and/or on a sintered matter after the sintering step.

A water treatment method of the present invention includes a step of removing anions from the water to be treated by contacting the anion absorbent with the water to be treated.

According to the water treatment method, anions such as fluoride ion, borate ion, phosphate ion, and arsenite ion, which are contained in, for example, open water such as river water, groundwater, seawater, and lake water, various kinds of waste water such as sewage water and industrial drainage, water in aquariums, pet shops, household fish tanks, and preserves can be effectively and economically absorbed and thus removed.

### DETAILED DESCRIPTION OF THE PRESENT INVENTION

Hereinafter, preferred embodiments of the present invention will be described.

An anion absorbent of the present invention contains sintered clay having porous structure and a rare earth compound supported on the sintered clay.

The anion absorbent of the present invention is produced by a method including a mixing step wherein clay is mixed with an additive for making the clay porous, a sintering step wherein a mixture obtained by the mixing step is sintered, and a supporting step wherein a rare earth compound is supported on the clay before the mixing step and/or a sintered matter after the sintering step. However, the production method of the anion absorbent of the present invention is not limited thereto.

As the clay, montmorillonite and bentonite of smectite series and the like may be used. These may be used alone or in combination.

The additive is preferably an agent which is solid when mixed in the clay and generates gases because the agent is at least partially sublimated, evaporated, thermally decomposed, or oxidized in the subsequent sintering step. The agent is at least partially sublimated, evaporated, thermally decomposed, or oxidized when sintered so as to form spaces at portions where the agent was present (hereinafter, this phenomenon will be sometimes called "burnout of agent"), thereby making the sintered clay porous.

Examples of the additive include carbonic substances which are oxidized to generate carbon dioxide at a sintering temperature such as wood coal and mineral coal; inorganic compounds which are vaporized to generate carbon dioxide and moisture vapor at a sintering temperature such as sodium hydrogen carbonate; and organic compounds which generate carbon dioxide and moisture vapor at a sintering temperature such as carbon hydride, organic mud, refuse paper, waste oil, and scourings. The preferable additive is a substance which can be entirely sublimated, evaporated, thermally decomposed, or oxidized when sintered and be thus entirely burned out from the mixture.

If only carbon hydride or oxygenated carbon hydride compound is used as the additive, the additive generates only moisture vapor and carbon dioxide when sintered.

As the additive, the following (1) through (3) are preferably used. Among these, activated carbon powder of which particle diameters can be small without variations is particularly preferable.
(1) carbonic substance which generates only carbon dioxide when sintered;
(2) carbon hydride or oxygenated carbon hydride compound which generates only moisture vapor and carbon dioxide when sintered; and
(3) carbonate and/or hydrogen carbonate of alkali metal which generates only moisture vapor and carbon dioxide with slightly residual alkali metal in sintering step.

The additives may be used alone or in combination.

The particle diameters of the additive dectate the pore diameters of the porous structure of the obtained sintered clay. As the particle diameter of the additive is smaller, the sintering temperature is allowed to be lower and the sintering time period is allowed to be shorter. If the particle diameter of the additive is too small, the diameters of pores of the obtained sintered clay are small to lower the water permeability required for absorbing anions while it has still effect on increase in the specific surface area of the absorbent. On the other hand, if the particle diameter of the additive is too large, the specific surface area of the absorbent is reduced and the strength of the absorbent is lowered while the diameters of pores of the obtained sintered clay are so large as to improve the water permeability. To obtain an absorbent having high strength, excellent water permeability, and having a large specific surface area, the mean particle diameter of the additive used is preferably 1-50 µm, particularly 2-20 µm.

Two or more kinds of additives having different mean particle diameters may be used. A combination of an additive having relatively large mean particle diameter and an additive having relatively small mean particle diameter ensures that pores of relatively large diameter and pores of relatively small diameter both exist in the obtained sintered clay, thereby obtaining an absorbent having excellent balance in strength, water permeability, and specific surface area. For example, an additive having mean particle diameter of 1-5 µm and an additive having mean particle diameter of 10-30 µm which are mixed at a ratio ranging 20-40:80-60 (weight ratio.100 parts by weight in total) may be used.

When the mixing rate of the additive into the clay is lower than the above lower limit, the ratio of pores in the obtained absorbent is so small that the specific surface area will not increase and the water permeability will not be improved. On the other hand, when the mixing rate of the additive into the clay exceeds the above higher limit, the ratio of pores in the obtained sintered clay is so large that the strength of the obtained absorbent should be poor.

The mixing rate of the additive into the clay depends on the kind and particle diameter of the used additive, but normally preferably is 5-50% as weight, particularly 10-20% as weight relative to the dry weight of the clay.

In the present invention, the rare earth compound may be added into the clay before being sintered and may be supported on the sintered matter.

As the rare earth compound, chlorides, oxides, and hydroxide of cerium, yttrium, and lanthanum may be used. Among these, cerium compounds and lanthanum compounds are preferable. The lanthanum compounds are preferable because they are relatively cheap. Examples of lanthanum compounds include lanthanum chloride, lanthanum oxide, and lanthanum hydroxide. Examples of cerium compounds include cerium chloride, cerium oxide, and cerium hydroxide.

When the amount of the rare earth compound supported on the anion absorbent is too small, absorptive capability of the absorbent is insufficient. The amount of the rare earth compound supported on the anion absorbent is preferably 1-60% as weight, particularly 2-30% as weight as element content of rare earth metal relative to the dry weight of the clay.

The rare earth compound can be supported on the clay or the sintered matter, for example, by soaking the clay or the sintered matter in aqueous solution containing about 0.05-0.5M of the rare earth compound and then performing solid-liquid separation. The supporting of the rare earth compound may be conducted relative to the clay before being sintered and may be conducted relative to the sintered matter after sintered. Generally, the amount of supported rare earth compound, that is, the concentration of rare earth compound in the absorbent when the rare earth compound is supported on the sintered matter after sintered tends to be greater than that when the rare earth compound is supported on the clay before being sintered. The supporting of the rare earth compound may be conducted to both the clay and the sintered matter.

To mix the clay supporting the rare earth compound or the clay not supporting the rare earth compound and the additive, it is preferable to add a suitable amount of water to them and kneading them and forming them into a desired shape. The amount of water to be used is preferably about 5-40% as weight relative to the dry weight of the clay in view of the kneading ability and the forming ability. There is no particular limitation on shape and size for forming the kneaded matter. The kneaded matter may be formed to obtain an absorbent having a suitable shape and size as will be described later, depending on the type of usage, handling property, absorptive capability, and water permeability of the absorbent.

When the size of the formed matter to be subjected to sintering is too large, the efficiency of heat transfer to the inside of the formed matter during the sintering is reduced so that the additive inside thereof is hardly efficiently sublimated, evaporated, thermally decomposed, or oxidized and is hardly efficiently radiated. Therefore, there is necessary to increase the sintering temperature and/or lengthen the sintering time period. When the size of the formed matter to be subjected to sintering is too large, the strength of the obtained absorbent may be reduced because of difference in shrinkage ratio between the inner portion and the outer portion of the formed matter. Therefore, it is preferable to form the kneaded matter to have a predetermined size or less. In order to improve the efficiency of sintering and efficiency of sublimation, evaporation, thermal decomposition, or oxidation of the additive and to prevent the difference in shrinkage ratio between the inner portion and the outer portion of the formed matter, the formed matter to be subjected to sintering has such a size that the distance from the center to the surface is 10 mm or less, preferably for example 1-5 mm.

The sintering temperature of the formed matter of a mixture of the clay and the additive is over the temperature at which the additive is burned out, that is, preferably 400-900°C, more preferably 500-700°C. When the sintering temperature is less than 400°C, there is a problem that the strength in connection of melt clay is insufficient so that the obtained absorbent easily lose shape as the absorbent is soaked in water. When the sintering temperature is over 900°C, the strength of the obtained absorbent is high, but the absorptive capability significantly deteriorates because of the following reasons.

The sintering temperature required to burn out additive depends on the kind of additive. The burnout temperatures of typical additives are as follows:
Carbonate, bicarbonate: 300°C or more
Waste oil: 200°C or more
Wood coal: 300°C or more
Mineral coal: 500°C or more
Therefore, preferable sintering temperature in the present invention is400-900°C, particularly 500-700°C, that is, over the temperature at which the additive is burned out.

Hereinafter, the reason why the absorptive capability of the obtained absorbent deteriorates when the sintering temperature for the formed matter of the mixture of the clay and the additive is over 900°C will be described.

The mechanism of making porous body according to the present invention is as follows. That is, the clay e.g. bentonite is clay like powder consisting of fine particles. The formed matter of the mixture of the clay and the additive is in a state that particles of the additive are surrounded by particles of bentonite in a drying step of initial stage of the sintering. As the formed matter is further sintered, the surfaces of particles of the benthonite are fused so that the particles of the benthonite are partially integrated. At the same time, the particles of the additive surrounded by the particles of bentonite are burned out. As a result, a porous sintered clay is obtained. Addition of the additive facilitates the formation of pores during the sintering as mentioned above, thereby easily making a porous body. However, when the sintering temperature is too high, the particles of bentonite are fused not only at surfaces thereof but also entirely fused, thus crushing the porous structure. Accordingly, it is impossible to form a porous body. As a result, the obtained absorbent has deteriorated absorptive capability.

In the sintering process, it is preferable to keep the aforementioned sintering temperature for 1.0-4.0 hours. Time for rising temperature is preferably 0.5-3.0 hours and time for cooling is preferably 0.5-3.0 hours or spontaneous cooling is also preferable.

A furnace may be freely selected, for example, a moving bed furnace, fluidized bed furnace. Alternatively, the furnace may be of a tower type or a rotary kiln type.

Hereinafter, two examples of production method for the absorbent formed to have granular shape will be described. The production method of the present invention is not limited thereto. (1)
1.1 Bentonite is soaked in 0.1MLaCl₃ solution wherein the ratio of the 0.1MLaCl₃ solution and the bentonite is 100:1 (weight ratio). By centrifugal separation after the soaking, sediment is collected.
1.2 The collected bentonite is washed with pure water and is dried at 50-90°C, for example, 60°C.
1.3 The dried bentonite is mixed with water and an additive in such a manner as to satisfy bentonite (except for supported LaCl₃):water:additive = 4:1:1 (weight ratio) and uniformly kneaded. Then, the kneaded matter is formed in granular shape of about 0.5-10 mm in grain diameter.
1.4 The formed matter is sintered at 700°C for 1 hour. (2)
2.1 Bentonite, water, and an additive are mixed in such a manner as to satisfy bentonite : water : additive = 4 : 1 : 1 (weight ratio) and uniformly kneaded. Then, the kneaded matter is formed in granular shape of about 0.5-10 mm in grain diameter.
2.2 The granular matter is sintered at 700°C for 1 hour.
2.3 The sintered granular matter is soaked in 0.1MLaCl₃ solution wherein the ratio of the sintered granular matter and the 0.1MLaCl₃ solution is 1:100 (weight ratio). After the soaking, granular matter settling out of the solution is collected.
2.4 The collected granular matter is washed with pure water and is dried at 50-90°C, for example, 60°C.

The anion absorbent of the present invention obtained in this manner has a shape, size, and properties as described below from viewpoints of the absorptive capability, water permeability, and handling property (strength, solid-liquid separating function).

### (Shape, Size)

There is no specific limitations on shape of the absorbent. Examples include granular, bar-like, tubular, and plate-like shapes and the shape can be suitably selected according to the purpose and/or application. The size of the absorbent is preferably 0.5-10 mm, particularly 1-5 mm from viewpoints of the handling property and absorptive capability.

It should be noted that the "size of the absorbent" means a diameter (mean grain diameter) when the absorbent has granular shape. When the absorbent has another shape, the "size of the absorbent" means an average of the shortest diameters (the length at which the distance between two parallel plates sandwiching the absorbent is shortest. For example, the thickness when the absorbent has plate-like shape).

### (Physical properties)

The anion absorbent of the present invention has pores which are formed by adding an additive during production. These pores promote permeability of water (water permeability) into the absorbent and convective movement of anions (increases the moving speed of anions within the absorbent). As the volume of the pores is larger so that the pores have larger surface areas and larger diameters, the strength of the absorbent is lower and the life of the absorbent in use is shorter. On the other hand, when the volume of the pores is too small, the movement of anions within the absorbent is diffusion controlled speed so that the reaction speed of the absorbent is low. To obtain desired properties, the size and the amount of additive to be used should be suitably controlled to obtain an absorbent having the following physical properties.

### <Surface roughness>

The anion absorbent of the present invention has preferably surfaces formed with micropores contributing to convective movement of anions into the absorbent. It is preferable that the arithmetic average surface roughness (Ra) when scanned at 1 µm intervals is 3 µm or more, for example 3-15 µm because of existence of the micropores.

When the surface roughness (Ra) of the absorbent is smaller than 3 µm, enough water permeability can not be obtained so that the absorptive efficiency is insufficient. On the other hand, when the surface roughness (Ra) is too large, the strength of the absorbent may be insufficient. Therefore, the surface roughness (Ra) of the absorbent is preferably in the aforementioned range.

### <Specific surface area>

The specific surface area of the anion absorbent of the present invention is preferably 10-50 m²/g as a BET absorptive surface area measured according to the nitrogen absorbing method. Too small specific surface area defies sufficient absorptive capability, while too large specific surface area leads to poor strength.

### <Mean diameter of pores>

The mean diameter of pores of the absorbent of the present invention is preferably 50-500Å, particularly 100-200Å. Too small mean diameter reduces the water permeability, while too large mean diameter leads to reduction in strength of the absorbent and defies securing of large specific surface area. The mean diameter of pores of the absorbent can be obtained by gas absorption method using nitrogen gas.

### <Porosity>

The porosity of the absorbent of the present invention is preferably 20-50%. Too small porosity defies securing of large specific surface area, makes the absorptive capability poor, and also makes the water permeability poor. Too large porosity leads to reduction in strength of the absorbent. The porosity of the absorbent can be measured by the underwater saturation method and the mercury pressure method.

The anion absorbent of the present invention may support another absorptive component besides the rare earth compound, for example, IIIB group element, IVB group element, for example, zirconium, and other metals. The absorptive component may be supported on clay before the sintering or on sintered matter after the sintering. In case that the absorptive component is a metal of which absorptive capability is deteriorated by the sintering, the absorptive component is preferably supported on the sintered matter after the sintering.

Though a mixture of clay, an additive, and water is formed before the sintering in the above described method, the mixture may be formed after the sintering. The forming of the mixture after the sintering can be allowed, for example, by dispersing the sintered matter by a sand grind mill or a ball mill. Also in a case of forming after the sintering, it is preferable that a mixture of the clay and the additive is formed before the sintering. In case of formation and supporting of the rare earth compound are conducted after the sintering, the supporting of the rare earth compound may be conducted after the formation or the formation may be conducted after the supporting of the rare earth compound.

Hereinafter, a water treatment method of the present invention using the aforementioned anion absorbent of the present invention will be described.

According to the water treatment method of the present invention, anions in the water to be treated are removed therefrom by contacting the water with the anion absorbent of the present invention at a predetermined pH, thereby the anions being absorbed and thus removed.

In the water treatment method of the present invention, examples of anions to be absorbed and removed include fluoride ion, borate ion, phosphate ion, and arsenite ion. The water treatment method of the present invention is suitably applied to purification of open water such as river water, groundwater, seawater, and lake water, various kinds of waste water such as sewage water and industrial drainage, water in aquariums, pet shops, household fish tanks, and preserves which contain the aforementioned anions.

In the water treatment method of the present invention, either of a reaction vessel suspension method and a packed tower flowing method may be employed as a means for contacting the absorbent with the water to be treated.

In case of the reaction vessel suspension method, an absorbent (this absorbent has preferably granular shape of 0.5-2 mm in mean grain diameter for providing larger contact area.) according to the present invention is added to water to be treated in a reaction vessel and is agitated so that the water to be treated and the absorbent are brought in contact with each other, whereby the absorbent absorbs anions in the water and the treated water and the absorbent are separated from each other by the solid-liquid separation. In this case, since the absorbent of the present invention comprises rare earth compound supported on porous sintered clay, the absorbent has good solid-liquid separation capability. Therefore, the solid-liquid separation is smoothly conducted.

There is no specific limitations on the solid-liquid separation method so that any means such as sedimentation, centrifugal separation, and membrane separation may be employed. The absorbent after separation can be regenerated by agitating the absorbent within desorbing solution so that the absorbent is brought into contact with the desorbing solution, whereby the absorbent can be recycled for treatment.

In this case, a reaction vessel (absorption vessel), a solid-liquid separation means, and a desorption vessel are connected, slurry containing the absorbent may be transmitted sequentially by a pump so as to conduct continuous treatment. Alternatively, butch treatment sequentially conducting the respective processes including absorption, solid-liquid separation, and desorption in a single vessel may be employed.

In case of the packed tower flowing method, an absorbent according to the present invention is put in the packed tower and water to be treated is flowed into the packed tower (absorption tower), thereby obtaining treated water. In this case, the absorbent is required to be adjusted to have such grain size (for example, mean grain diameter of 5-10 mm) not to flow out of the tower due to stream. The absorption tower may be of a fixed bed type in which a fixed layer is formed even when water to be treated is fed or of a fluidized bed type in which the absorbent is fluidized when water to be treated is flowed. The direction of flowing water may be upward or downward. After the absorption treatment by flowing water to be treated, desorbing solution is flowed into the tower so as to bring the absorbent in the tower into contact with the desorbing solution, thereby regenerating the absorbent.

In this case, the absorption and desorption may be conducted alternately in a single tower or conducted in a plurality of towers. In the latter case, the towers are arranged in parallel so that the absorption process is conducted in some towers while the desorption process is conducted in other towers. In this case, the continuous water flow is allowed by switching between packed towers into which water to be treated is fed.

When anions are absorbed by the absorbent of the present invention, the absorbing amount largely varies depending on pH condition. Since respective predetermined preferable pHs suitable for absorption exist according to anions as an object to be absorbed, it is important to adjust the pH of water to the predetermined pH.

The absorption of fluoride ion is conducted generally preferably at a pH from 3 to 6, particularly a pH from 3 to 4. The absorption of borate ion is conducted generally preferably at a pH from 5 to 7, particularly a pH from 5 to 6. The absorption of phosphate ion is conducted generally preferably at a pH from 5 to 9, particularly a pH from 6 to 8. The absorption of arsenite ion is conducted generally preferably at a pH from 5 to 10, particularly a pH from 6 to 9. Therefore, when the pH of the water to be treated which contacts with the absorbent is outside the preferable range of pH, it is preferable to adjust the pH to the preferable pH range by arbitrarily adding acid or alkali.

To desorb absorbed anions from the absorbent after the absorption process, the absorbent is contacted with desorbing solution having a pH value outside the preferable range of pH suitable for absorption. In case where fluoride ion is absorbed by the absorbent, the pH of the desorbing solution is preferably from 1 to 2 or from 11 to 13. For example, the absorptive capacity is restored by feeding desorbing solution consisting of acid solution of pH from 1 to 2 at a flow rate of 1-20% by volume of treated water. Examples of acid include hydrochloric acid, sulfuric acid, and nitric acid. Nitric acid is particularly effective. Alkaline solution of pH from 11 to 13 may be also employed. For example, solution of sodium hydroxide, potassium hydroxide, and the like may be employed. For restoration, agent improving desorption effect such as oxidizing agent, reducing agent, and the like may be used alone or in a mixed state with alkaline solution.

The pH of desorbing solution for absorbent which absorbed borate ion is preferably from 3 to 5, the pH of desorbing solution for absorbent which absorbed phosphate ion is preferably from 1 to 4, and the pH of desorbing solution for absorbent which absorbed arsenite ion is preferably from 10 to 12.

The absorbent after anions absorbed therein is desorbed by contact between the absorbent and desorbing solution is preferably conditioned to have a pH suitable for absorption again for reuse. Washing treatment may be conducted prior to this conditioning after the desorption.

Water to be used for the desorption, washing, and conditioning may be newly supplied water such as clean water, recycled water treated from the desorbing solution, or treated water obtained by the absorption treatment.

There is no specific limitations on treatment condition for the desorption, washing, and conditioning. The treatment condition is suitably determined according to the treatment method, that is, the desorption vessel suspension method or the packed tower flowing method.

As mentioned above, there are respective pH ranges suitable for absorption for respective kinds of anions. When plural kinds of anions exist in water to be treated, all of the anions can be absorbed and removed by repeating absorption treatment with sequentially adjusting pH. For example, by first adjusting the pH of water to be treated to a pH from about 3 to 4 and contacting the absorbent of the present invention with the water, fluoride ion can be absorbed and removed. After that, by adjusting the pH of water to be treated to a pH from 6 to 8 and contacting the absorbent of the present invention with the water, phosphate ion can be absorbed and removed.

Hereinafter, the present invention will be described in detail with reference to Examples and Comparative

### Examples.

### [Example 1]

### (Production of anion absorbent)

Bentonite was soaked in 0.1MLaCl₃ solution wherein the ratio of the 0.1MLaCl₃ solution and the bentonite was 100:1 (weight ratio). By centrifugal separation after the soaking, sediment was collected. The collected bentonite is washed with pure water and was dried at 60°C. The dried bentonite was mixed with water and activated carbon in such a manner as to satisfy bentonite (except for supported LaCl₃):water:activated carbon = 4:1:1 (weight ratio) and uniformly kneaded. Then, the kneaded matter was formed in granular shape of 5 mm in mean grain diameter. The formed matter was sintered under conditions of 700°C and 1 hour for maintaining and was spontaneously cooled. The activated carbon used was activated carbon of 3 µm in mean particle diameter.

The lanthanum amount supported on the obtained absorbent was measured by the IPC emission spectrometry and was 4.5% as weight relative to the dry weight of bentonite.

The absorbent was granular and had a mean grain diameter of 5 mm. The physical properties of the absorbent are shown in Table 3 as will be shown later.

### (Test for absorption of fluoride ion)

Solution of which fluoride ion concentration was 20 mg-F/L was used as water to be treated. The pH of the water to be treated was adjusted to 3 which was a preferable pH suitable for absorption of fluoride ion. 0.4g of the obtained granular absorbent was added to 200 mL of the water to be treated and was agitated for 16 hours by a magnetic stirrer. The amount of absorbed fluoride ion was calculated from the fluoride ion concentration after the agitation. The result is shown in Table 1.

### (Evaluation of shape maintenance of absorbent)

The condition how the granular shape of the absorbent was maintained after the absorbent was soaked in the water to be treated for 24 hours with being agitated was observed and was evaluated according to the following criteria. The result is shown in Table 1.
++: The granular shape of the absorbent is stably maintained without being destroyed even after 24-hour soaking.
+: The granular shape of the absorbent is roughly maintained with being slightly destroyed after 24-hour soaking.
±: Parts of the absorbent are destroyed after 24-hour soaking.
-: The granular shape of the absorbent is not maintained because the absorbent is destroyed just after soaking.

### [Comparative Example 1]

A granular absorbent was produced in the same manner as Example 1 except that activated carbon was not used during the production of the absorbent. The test for absorption and the evaluation of shape maintenance were conducted in the same manner. The results are shown in Table 1. The physical properties of this absorbent are shown in Table 3 as will be shown later.

**[Table 1]**

| Example | Example 1 | Comparative Example 1 |
|---|---|---|
| Evaluation of shape maintenance | ++ | ++ |
| Initial concentration (mg-F/L) | 20 | 20 |
| Concentration after absorption (mg-F/L) | 4 | 13.3 |
| Absorbing volume by absorbent (mg-F/g-absorbent) | 8 | 3.4 |

As apparent from Table 1, the absorbent of Example 1 containing activated carbon is improved in absorbing volume relative to the absorbent of Comparative Example 1 without containing activated carbon. The reason may be that the bentonite as a carrier is formed to be porous whereby the movement of anions into the absorbent is promoted and the specific surface area is increased. Therefore, the absorbent can effectively exhibit absorptive capability.

### [Example 2]

A granular absorbent was produced in the same manner as Example 1 except that sodium bicarbonate of 40 nm in mean particle diameter was used instead of the activated carbon. The test for absorption and the evaluation of shape maintenance were conducted in the same manner. The results are shown in Table 2.

The absorbent was granular and had a mean grain diameter of 5 mm similar to the absorbent of Example 1. The physical properties of the absorbent are as follows:
Surface roughness (Ra): 10 µm
Specific surface area: 17 m²/g
Mean diameter of pores: 73Å
Porosity: 35%

### [Example 3]

A granular absorbent was produced in the same manner as Example 2 except that the sintering temperature was 300°C. The test for absorption and the evaluation of shape maintenance were conducted in the same manner. The results are shown in Table 2.

The absorbent was granular and had a mean grain diameter of 5 mm similar to the absorbent of Example 1. The physical properties of the absorbent are as follows:
Surface roughness (Ra): 10 µm
Specific surface area: 19 m²/g
Mean diameter of pores: 51Å
Porosity: 39%

**[Table 2]**

| Example | Example 2 | Example 3 |
|---|---|---|
| Evaluation of shape maintenance | ++ | - |
| Initial concentration (mg-F/L) | 20 | 20 |
| Concentration after absorption (mg-F/L) | 4.7 | 4.3 |
| Absorbing volume by absorbent (mg-F/g-absorbent) | 7.7 | 7.9 |

As apparent from Table 2, there is a little difference in absorptive capability between the absorbents of Example 2 and Example 3. In Example 3, however, the absorbent was destroyed and the granular shape could not be maintained. The reason may be that the sintering temperature in Example 3 was low so that the melting and connection between clay particles could not sufficiently achieved so as to make the strength of the absorbent low.

### [Examples 4-8]

Granular absorbents were produced in the same manner as Example 1 except that the amount of activated carbon was changed to the values shown in Table 3. The physical properties of these absorbents are shown in Table 3. The test for absorption and the evaluation of shape maintenance for these absorbents were conducted in the same manner as Example 1. The results are shown in Table 3. Table 3 also includes the results of Comparative Example 1 and Example 1.

**[Table 3]**

| Example | Comparative Example 1 | Example 4 | Example 5 | Example 1 | Example 6 | Example 7 | Example 8 |
|---|---|---|---|---|---|---|---|
| Activated carbon/bentonite (weight ratio) | 0 | 0.05 | 0.1 | 0.25 | 0.3 | 0.4 | 0.5 |
| Physical properties of absorbent Shape | granular | granular | granular | granular | granular | granular | granular |
| Mean grain diameter (mm) | 5 | 5 | 5 | 5 | 5 | 5 | 5 |
| Surface roughness (Ra)(µm) | 0.9 | 2 | 4 | 6 | 10 | 12 | 14 |
| Specific surface area (m²/g) | 8 | 8.2 | 9.3 | 21.2 | 32.7 | 34.2 | 35.4 |
| Mean diameter of pores (Å) | 69 | 72 | 72 | 74 | 76 | 75 | 76 |
| Porosity (%) | 19 | 24 | 27 | 34 | 39 | 44 | 55 |
| Evaluation of shape maintenance | ++ | ++ | ++ | ++ | + | ± | - |
| Initial concentration (mg-F/L) | 20 | 20 | 20 | 20 | 20 | 20 | 20 |
| Concentration after absorption (mg-F/L) | 13.3 | 10.2 | 7.8 | 4 | 4 | 3.9 | 3.9 |
| Absorbing volume by absorbent (mg-F/g-absorbent) | 3.4 | 4.9 | 6.1 1 | 8 | 8 | 8.1 1 | 8.1 |

As apparent from Table 3, the larger the additive amount of activated carbon is, the lower the strength of the absorbent is. In Example 8, the absorbent was subjected to loss of shape just after the soaking. In Example 7, the shape was maintained just after the soaking, but after 24-hour soaking, the absorbent was partially subjected to loss of shape.

### [Example 9]

By using the granular absorbent produced in Example 1, fluoride ion was absorbed in the same manner as Example 1. After the absorbent was collected by sedimentation separation, the absorbed fluoride ion was desorbed by bringing the absorbent into contact with hydrochloric acid or nitric acid of pH 1.5. The desorbing amount was calculated from the fluoride ion concentration of the desorbing solution. The absorption and desorption process was repeated five times. The respective desorbing amounts are shown in Table 4.

### [Example 10]

An absorption and desorption process was repeated in the same manner as Example 9 except that water containing phosphate ion was used as water to be treated instead of water containing fluoride ion. The desorbing amounts were calculated in the same manner and are shown in Table 5.

**[Table 4]**

| Number of dsorption (time) | | 1 | 2 | 3 | 4 | 5 |
|---|---|---|---|---|---|---|
| Desorbing amount | HNO₃ | 1.46 | 1.39 | 1.33 | 1.31 | 1.21 |
| (mg-F/g-absorbent) | HCl | 1.64 | 1.2 | 1.14 | 1.11 | 1.18 |

**[Table 5]**

| Number of dsorption (time) | | 1 | 2 | 3 | 4 | 5 |
|---|---|---|---|---|---|---|
| Desorbing amount | HNO₃ | 0.95 | 1.06 | 1.03 | 0.77 | 0.74 |
| (mg-P/g-absorbent) | HCl | 0.09 | 0.07 | 0.16 | 0.11 | 0.09 |

The followings are apparent from Tables 4 and 5. For fluoride ion, the desorption capability was maintained over five-time repeats of recycling in both cases of using nitric acid and of using hydrochloric acid. For phosphate ion, the desorption capability was maintained over five-time repeats of recycling in case of using nitric acid, while the recycling effect was poor in case of using hydrochloric acid.

## Claims

1. An anion absorbent comprising:
sintered clay of porous structure; and
a rare earth compound supported on the sintered clay.

2. An anion absorbent as claimed in claim 1, wherein the rare earth compound is at least one selected from a group consisting of lanthanum compounds and cerium compounds.

3. An anion absorbent as claimed in claim 1, wherein the amount of the supported rare earth compound is contained 1-60 weight % as metal to the dry weight of the clay.

4. An anion absorbent as claimed in claim 1, wherein the mean grain diameter is 0.5-10 mm.

5. An anion absorbent as claimed in claim 1, wherein the arithmetic average surface roughness when scanned at 1 µm intervals is 3 µm or more.

6. An anion absorbent as claimed in claim 1, wherein the BET specific surface area is 10-50 m²/g.

7. An anion absorbent as claimed in claim 1, wherein the mean diameter of pores is 50-500Å.

8. An anion absorbent as claimed in claim 1, wherein the porosity is 20-50%.

9. A production method for producing an anion absorbent as claimed in claim 1 comprising:
a mixing step wherein clay is mixed with an additive for making the clay porous;
a sintering step wherein a mixture obtained in the mixing step is sintered; and
a supporting step wherein a rare earth compound is supported on the clay before the mixing step and/or on a sintered matter after the sintering step.

10. A production method as claimed in claim 9, wherein the additive is solid in said mixing step and is formed to be at least partially gaseous in said sintering step.

11. A production method as claimed in claim 10, wherein the additive is at least one selected from a group consisting of carbon substances, carbon hydride compound, oxygenated carbon hydride compound, carbonate of alkali metal, and bicarbonate of alkali metal.

12. A production method as claimed in claim 11, wherein the additive is activated carbon powder.

13. A production method as claimed in claim 9, wherein the mean particle diameter of the additive is 1-50 µm.

14. A production method as claimed in claim 9, wherein the mixing rate of the additive into the clay is 5-50% as weight relative to the dry weight of the clay.

15. A production method as claimed in claim 9, wherein the mixing step includes kneading the clay, the additive, and water and then forming a kneaded mixture.

16. A production method as claimed in claim 9, wherein the sintering temperature in the sintering step is 400-900°C which is higher than temperature allowing the additive to make the clay porous.

17. A water treatment method comprising:
an absorbing step of bringing an anion absorbent as claimed in claim 1 into contact with water to be treated at a predetermined pH so as to absorb and thus remove anions in the water to be treated.

18. A water treatment method as claimed in claim 17, wherein said method further comprises a desorbing step of bringing the absorbent, which absorbed anions in the absorbing step, into contact with solution having pH which is different from said predetermined pH so as to desorb anions from the absorbent.

19. A water treatment method as claimed in claim 18, wherein the absorbent after anions are desorbed in the desorbing step is reused for the absorbing step after being brought in contact with solution at said predetermined pH.

20. A water treatment method as claimed in claim 17, wherein the anions to be subjected to the absorbing treatment is one or more selected from a group consisting of fluoride ion, borate ion, phosphate ion, and arsenite ion.

21. A water treatment method as claimed in claim 18, wherein the absorbent which absorbed fluoride ion at a pH of 3-6 in the absorbing step is brought into contact with solution at a pH of 1-2 so as to desorb fluoride ion from the absorbent.
